# EUROPÄISCHE PATENTSCHRIFT

(11) **EP 2 129 886 B1**
(45) Veröffentlichungstag und Bekanntmachung des Hinweises auf die Patenterteilung: **07.07.2010**
(21) Anmeldenummer: 08708441.4
(22) Anmeldetag: 30.01.2008
(51) Int. Cl.: F01N 3/20, B60R 13/08

(54) **DOSIERMODUL MIT VERBESSERTEN AKUSTISCHEN EIGENSCHAFTEN**
METERING MODULE WITH IMPROVED ACOUSTIC PROPERTIES
MODULE DE DOSAGE PRÉSENTANT DES PROPRIÉTÉS ACOUSTIQUES AMÉLIORÉES

(30) Priorität: 21.03.2007 DE 102007013524
(43) Veröffentlichungstag der Anmeldung: 09.12.2009
(73) Patentinhaber: Robert Bosch GmbH, 70442 Stuttgart (DE)
(72) Erfinder: HAEBERER, Rainer, 75015 Bretten (DE); KIENZLE, Burghard, 70839 Gerlingen (DE); GRIESINGER, Siegbert, 75443 Oetisheim (DE); HORN, Matthias, 71691 Freiberg (DE)
(86) Internationale Anmeldenummer: PCT/EP2008/051126
(87) Internationale Veröffentlichungsnummer: WO 2008/113635

(56) Entgegenhaltungen:
- WO-A-02/42616
- DE-A1- 10 039 706
- DE-A1- 10 146 141
- DE-A1- 10 241 698
- DE-B3- 10 345 575

## Beschreibung

### Stand der Technik

Die Erfindung betrifft eine Vorrichtung zum Dosieren eines flüssigen Reduktionsmittels in ein Abgassystem. Derartige Vorrichtungen werden insbesondere eingesetzt zur Reduzierung von Schadstoffen in Abgasen.

Bei Verbrennungskraftmaschinen, insbesondere bei dieselbetriebenen Verbrennungskraftmaschinen, muss aufgrund der in den nächsten Jahren anstehenden verschärften Abgasgesetzgebungen unter anderem der Anteil an Stickoxiden im Abgas reduziert werden. Zur Reduzierung des Stickoxid-Anteils im Abgas wird zum Beispiel eine selektive katalytische Reduktion (SCR) durchgeführt, bei welcher die Stickoxide mit Hilfe von Reduktionsmitteln zu Stickstoff und Wasser reduziert werden. Als Reduktionsmittel wird zum Beispiel eine wässrige Harnstofflösung eingesetzt. Üblicherweise wird dabei der Schadstoff NOx unter Zuhilfenahme von flüssigen Reduktionsmitteln zu N₂ und H₂O reduziert.

Das Reduktionsmittel wird üblicherweise in einem Tank gelagert und über eine Leitung vom Tank zu einem Dosiermodul befördert, mit dem das Dosiermodul zum Beispiel in das Abgasrohr eingespritzt wird. Ein Beispiel einer derartigen Vorrichtung ist in EP 0 928 884 A2 dargestellt.

Das Dosiermodul weist üblicherweise ein Dosierventil auf, welches von einem Adapter aufgenommen wird. Dieser Adapter mit dem Dosierventil kann auf das Abgasrohr aufgesetzt beziehungsweise aufgeschraubt werden.

Eine Problematik derartiger Dosiermodule mit einem Dosierventil und einem Adapter besteht jedoch darin, dass ein Schaltvorgang des Dosierventils zu einer hohen Geräuschbelastung führt. Ein Schaltvorgang (beispielsweise ein Öffnen oder ein Schließen des Dosierventils) führt in der das Ventil umgebenden Struktur, insbesondere in dem Adapter, zu Körperschall. Dieser Körperschall wird von den Außenflächen des Adapters auf die umgebende Luft übertragen und dabei als Luftschall abgestrahlt.

Aus dem Bereich der Automobiltechnik sind bereits verschiedene Möglichkeiten der Schallisolierung im Stand der Technik bekannt. Neben Isolationsmatten und Isolationsschäumen aus Stoffgeweben, Mineralfasern oder Polymerschäumen kommen dabei teilweise auch metallische Schallabsorber zum Einsatz. Ein Beispiel derartiger metallischer Schallabsorber ist in DE 103 45 575 B3 offenbart. Dabei wird eine Vorrichtung zur akustischen und thermischen Abschirmung vorgeschlagen, welche ein plattenförmiges Element mit einer Schicht eines Metallgewebes mit Kettfäden und Schussfäden aufweist. Die Kettfäden und Schussfäden sind an ihren Berührungspunkten durch Versintern miteinander verbunden, derart, dass das Metallgewebe Poren aufweist.

Eine Problematik der Verwendung derartiger spezieller metallischer Dämmstoffe besteht jedoch darin, dass derartige Werkstoffe gegenüber herkömmlichen Werkstoffen vergleichsweise teuer sind und dass nicht in allen Fällen übliche Bearbeitungs- und Herstellungsverfahren, die in der Automobiltechnik üblich sind, zum Einsatz kommen können.

### Offenbarung der Erfindung

Es wird daher eine Vorrichtung zum Dosieren eines flüssigen Reduktionsmittels in ein Abgassystem zur Reduzierung von Schadstoffen vorgeschlagen, welches eine effiziente und technisch leicht zu realisierende Schalldämmung der Schaltgeräusche bereitstellt. Dabei wird durch geeignete Maßnahmen am Adapter der Übergang des Körperschalls vom Ventil über den Adapter auf die den Adapter umgebende Luft verringert. Somit wird der aus dem Körperschall entstehende Luftschall reduziert.

Es sei darauf hingewiesen, dass die Vorrichtung hier vorgeschlagen wird als Vorrichtung zum Dosieren flüssiger Reduktionsmittel. Daneben kann die vorgeschlagene Vorrichtung jedoch auch grundsätzlich für andere Arten von Verbindungen eingesetzt werden, beispielsweise zum Einsetzen von Sonden in Abgasrohre, wobei die Sonden vibrationsgedämpft gelagert werden sollen. Auch weitere Anwendungen sind denkbar. Bevorzugt ist jedoch die oben beschriebene Anwendung im Rahmen eines SCR-Systems.

Die vorgeschlagene Vorrichtung umfasst ein Dosierventil, beispielsweise ein Dosierventil gemäß dem eingangs beschriebenen Stand der Technik, zum Eindosieren des flüssigen Reduktionsmittels. Weiterhin umfasst die Vorrichtung einen Adapter zur Montage auf einem Abgasrohr (zum Beispiel zum Aufsetzen, Aufschrauben, kraftschlüssigen und/oder stoffschlüssigen Verbinden). Das Dosierventil ist mit dem Adapter durch ein Verbindungselement verbunden, wobei dieses Verbindungselement mindestens einen metallischen Schallabsorber umfasst.

Die Verwendung des metallischen Schallabsorbers gewährleistet zum einen eine hohe Temperaturstabilität der Vorrichtung, was insbesondere im Automobilbereich von Vorteil ist. Weiterhin gewährleisten, wie aus dem Stand der Technik bekannt, metallische Schallabsorber eine hohe Effizienz der Schallabsorption.

Andererseits führt die Tatsache, dass vorzugsweise lediglich das den Adapter und das Dosierventil verbindende Verbindungselement ganz oder teilweise aus dem metallischen Schallabsorber gefertigt ist, zur Möglichkeit einer Kostenreduktion und zu deutlich vereinfachten Fertigungsmethoden. So kann das Volumen des Schallabsorbermaterials stark vermindert werden, wodurch die Kosten gesenkt werden. Weiterhin können für den Adapter und das Dosierventil nach wie vor in der Automobiltechnik übliche Fertigungsverfahren eingesetzt werden, so dass lediglich minimale Veränderungen von Standardprozessen erforderlich sind.

Der metallische Schallabsorber kann mindestens eines der folgende Absorberelemente aufweisen: ein poröses metallisches Element, insbesondere ein Sinterelement, einen metallischen Verbundwerkstoff, ein metallisches Geflecht, insbesondere ein gesintertes Geflecht und/oder ein gewalztes Geflecht, ein metallisches Gewebe, insbesondere ein gesintertes Gewebe und/oder ein gewalztes Gewebe. Damit lassen sich beispielsweise metallische Schäume mit guten Dämmeigenschaften einsetzen.

Besonders bevorzugt ist es jedoch, wenn ein Metallgewebe verwendet wird, wie es beispielsweise in der bereits oben zitierten DE 103 45 575 B3 zum Einsatz kommt. Dabei können bei der Herstellung dieses Metallgewebes metallische Kettfäden und Schussfäden verwendet werden, welche an ihren Berührungspunkten durch Versintern miteinander verbunden sind. Weiterhin kann, alternativ oder zusätzlich, auch ein Walzen des Gewebes erfolgen, um die Verbindung der metallischen Fäden weiter zu verbessern.

Derartige metallische Gewebe werden beispielsweise unter der Bezeichnung "Poroblech" von der Firma Härle Produktentwicklung angeboten und können als metallische Werkstoffe beispielsweise Aluminium, Stahl oder Edelstahl aufweisen. Auch andere Werkstoffe sind jedoch denkbar. Übliche Blechdicken reichen dabei von 0,3 mm bis 1 mm, und der Porenanteil liegt bei 5 % bis 60 %.

Schallwellen, die zwischen den Metallfäden eindringen, erfahren einen Reibungswiderstand und werden in Wärme umgesetzt.

Als besonders effizient hat es sich erwiesen, wenn dabei eine Schichtstruktur verwendet wird, bei welcher mindestens eine Schicht des metallischen Absorberelements mit mindestens einer Schicht eines schallharten Elements, vorzugsweise eines schallharten Metalls, kombiniert wird. Dabei kann beispielsweise ein definierter Abstand zwischen dem Absorberelement und der mindestens einen Schicht des schallharten Elements eingestellt werden, um die Effizienz des Schallabsorbers zu erhöhen. Vorzugsweise sollte ein kleiner Abstand gewählt werden, der auch mit einer inaktiven Zwischenschicht ausgefüllt sein kann und der beispielsweise >0,3 mm beträgt.

Der Schall wird von der schallharten Wand reflektiert und muss erneut durch das Schallabsorbermaterial hindurchtreten, wodurch (je nach Abstand zwischen schallharter Wand und Absorbermaterial) beispielsweise gezielte Frequenzbereiche aus dem Geräuschspektrum eliminiert werden können. Beispielsweise können zur gezielten Beeinflussung gewisser Frequenzbereiche auch inaktive Zwischenschichten zwischen das Absorberelement und die mindestens eine Schicht des schallharten Elements eingebracht werden, welche lediglich der Aufgabe dienen, einen definierten Abstand zwischen diesen beiden Elementen und damit eine gezielte Frequenzselektivität einzustellen.

Unter einem "schallharten" Element ist dabei ein Element zu verstehen, welches eine hohe akustische Impedanz aufweist, insbesondere eine höhere akustische Impedanz als das Absorberelement. Beispielsweise kann es sich bei diesen Materialien mit hoher Schallhärte um Stahl handeln (Schallimpedanz oder Schallkennimpedanz z ≈ 4,7 x 10⁷ Ns/m³) oder andere solide metallische Werkstoffe. Bevorzugt ist es, wenn die Schallkennimpedanz oberhalb von 10⁷ Ns/m³ liegt, vorzugsweise oberhalb von 4x10⁷ Ns/m³ .

Wird diese Schichtstruktur aus Absorberelement und schallhartem Element eingesetzt, so ist vorzugsweise die Absorberelement-Schicht auf einer dem Adapter zuweisenden Seite des Verbindungselements angeordnet, und die Schicht des schallharten Elements auf der vom Absorber wegweisenden Seite des Verbindungselements. Insbesondere kann das Verbindungselement mindestens ein scheibenförmiges Element aufweisen, welches vorzugsweise eine Nut zur Aufnahme des Dosierventils aufweist.

Dabei ist es bevorzugt, wenn das scheibenförmige Element als U-förmiges Element mit einer U-Nut zum Eingriff in eine entsprechende Nut des Dosierventils ausgebildet ist. Neben der Nut kann das scheibenförmige Element dann eine Auflagefläche zur Auflage auf dem Adapter aufweisen. Die Schichtstruktur aus Absorberelement und schallhartem Element kann beispielsweise durch Übereinanderlegen, insbesondere durch deckungsgleiches Übereinanderlegen entsprechender scheibenförmiger Elemente erfolgen, wobei die beschriebene Schichtstruktur entsteht.

Das scheibenförmige Schallabsorberelement und das scheibenförmige schallharte Element können beispielsweise kraftschlüssig oder formschlüssig (beispielsweise durch eine Schweißung) miteinander verbunden werden. Um den beschriebenen Reflexionseffekt am schallharten Element nicht zu behindern, kann diese Verbindung beispielsweise auf den Randbereich beschränkt werden, beispielsweise durch eine Verschweißung lediglich im Randbereich. Auch ein einfaches Aufeinanderlegen dieser beiden scheibenförmigen Elemente ist jedoch denkbar, sowie, wie oben beschrieben, der Einsatz zusätzlicher Elemente, beispielsweise Zwischenscheiben oder weiterer Scheiben, um eine mehrschichtige Struktur zu erzeugen.

Zum Verbinden des Dosierventils, des scheibenförmigen Elements und des Adapters kann das Verbindungselement weiterhin beispielsweise eine Klammer aufweisen, insbesondere eine biegsame (das heißt mit flexiblen Eigenschaften ausgestattete) Klammer. Auch andere Arten von Verbindungen sind jedoch einsetzbar, beispielsweise Überwurfmuttern, Verschraubungen oder Pratzen.

Auf diese Weise lässt sich eine kostengünstige, einfach zu fertigende und dennoch mit hoher Effizienz ausgestattete Schallisolierung von SCR-Systemen bewerkstelligen.

### Kurze Beschreibung der Zeichnungen

Ausführungsbeispiele der Erfindung sind in den Zeichnungen dargestellt und in der nachfolgenden Beschreibung näher erläutert.

Es zeigen
- Figur 1: eine erfindungsgemäße Vorrichtung zum Dosieren eines flüssigen Reduktions- mittels in Seitenansicht;
- Figur 2A: eine herkömmliche U-förmige Scheibe zur Verbindung zwischen Dosierventil und Adapter;
- Figur 2B: eine erfindungsgemäße Ausgestaltung der U-förmigen Scheibe;
- Figur 3A: ein Beispiel eines einsetzbaren Metallgeflechts in perspektivischer Darstellung;
- Figur 3B: ein Schliffbild des Metallgeflechts senkrecht zur y-Richtung in Figur 3A; und
- Figur 3C: ein Schliffbild durch das Metallgeflecht gemäß Figur 3A in einer Ebene senk- recht zur x-Richtung.

### Ausführungsformen

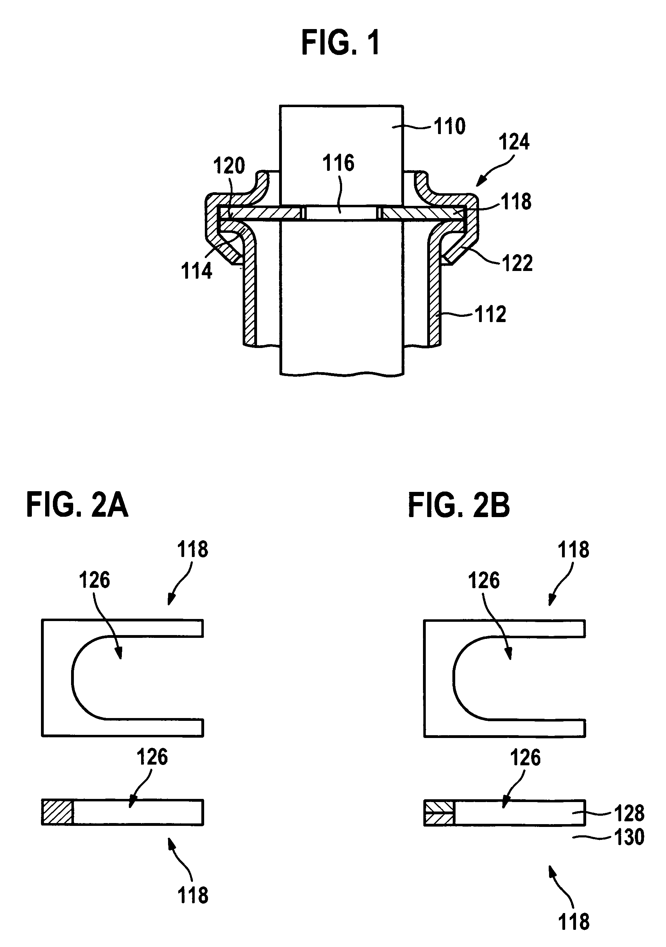

In der Figur 1 ist ein Ausführungsbeispiel einer erfindungsgemäßen Vorrichtung zum Dosieren eines flüssigen Reduktionsmittels in ein Abgassystem dargestellt. Die Vorrichtung umfasst ein Dosierventil 110, welches beispielsweise als druckgesteuertes Dosierventil ausgebildet sein kann, beispielsweise gemäß dem oben zitierten Stand der Technik.

Dieses Dosierventil 110 ist an seinem in Figur 1 oberen Ende beispielsweise über ein Rohrleitungssystem mit einem entsprechenden Tank zur Lagerung des flüssigen Reduktionsmittels verbunden, wobei weiterhin auch Pumpen und andere Elemente in diesem Rohrleitungssystem vorgesehen sein können. Mit seinem (in Figur 1 nicht dargestellten) Düsenende ist das Dosierventil 110 in einen zylinderhülsenförmigen Adapter 112 eingeschoben. Dieser Adapter 112 ist an seinem (in Figur 1 nicht dargestellten) unteren Ende ausgestaltet, um auf ein Abgasrohr aufgebracht zu werden, beispielsweise durch Verschrauben, Klemmen, Schweißen oder ähnliches. Dabei ist der Adapter 112 derart ausgestaltet, dass das Dosierventil 110 vorzugsweise zumindest teilweise in das Abgasrohr hineinragt.

An seinem oberen Ende ist der Adapter 112 mit einer Bördelung 114 versehen. Das Dosierventil 110 weist im Kopfbereich eine Nut 116 auf. In diese Nut greift eine U-förmige Scheibe 118, welche mit einer Auflagefläche 120 auf der Bördelung 114 des Adapters 112 aufliegt. Das Dosierventil 110 wird über die Nut 116 und die U-förmige Scheibe 118 in einer definierten axialen Lage positioniert. Diese axiale Lage des Dosierventils 110 wird über eine biegsame Klammer 122 fixiert. Die Klammer 122 und die U-förmige Scheibe 118 bilden somit gemeinsam ein Verbindungselement 124. In Figur 2A ist eine herkömmliche U-förmige Scheibe 118 in Draufsicht (oben) und in Schnittdarstellung von der Seite (unten) dargestellt. Dabei ist zu erkennen, dass die U-förmige Scheibe ebenfalls eine U-förmige Nut 126 aufweist, welche in die Nut 116 des Dosierventils 110 eingreifen kann. Üblicherweise werden die U-förmigen Scheiben 118, wie in Figur 2A dargestellt, als massive Blechscheiben ausgebildet, beispielsweise Stahlblechscheiben.

In Figur 2B ist hingegen eine erfindungsgemäße Ausgestaltung einer U-förmigen Scheibe 118 in Draufsicht von oben (oben) und in Schnittdarstellung von der Seite (unten) dargestellt. Dabei ist zu erkennen, dass das U-förmige Element 118 aus zwei übereinander gelegten Elementen besteht, nämlich einem schallharten Element 128 und einem Schallabsorberelement 130. Beide Elemente 128, 130 weisen insgesamt in Draufsicht die U-förmige Gestalt auf und sind vorzugsweise näherungweise deckungsgleich ausgebildet. Im dargestellten Ausführungsbeispiel sind die beiden Elemente 128, 130 mit näherungsweise gleicher Dicke ausgebildet, wobei jedoch auch andere Ausgestaltungen möglich sind.

Dabei ist das schallharte Element 128, welches, wie das Schallabsorberelement 130, scheibenförmig ausgebildet ist, auf der dem Adapter 112 abgewandten Seite der U-förmigen Scheibe 118 angeordnet (das heißt in Figur 1 oben), und das Schallabsorberelement 130 auf der dem Adapter 112 beziehungsweise der Bördelung 114 des Adapters 112 zugewandten Seite.

Die beiden scheibenförmigen Elemente 128, 130 können einfach übereinander gelegt werden, wobei diese dann durch die biegsame Klammer 122 zusammengehalten werden. Alternativ oder zusätzlich können beide scheibenförmigen Elemente 128, 130 auch stoffschlüssig, zum Beispiel durch eine Schweißung, verbunden werden. Beide Scheiben 128, 130 ersetzen somit die bisherige massive U-förmige Scheibe 118 gemäß dem Ausführungsbeispiel in Figur 2A.

Durch eine inaktive Zwischenschicht zwischen dem schallharten Element 128 und dem Schallabsorberelement 130, welche in den Figuren nicht dargestellt ist, könnte eine Geräuschreduzierung weiter verbessert werden. Als Beispielmaterialien wären hier anorganische oder organische Materialien, insbesondere Kunststoffschichten, beispielsweise Kunststofffolien oder Schaumstofffolien, oder auch metallische Materialien für die Zwischenschicht zu nennen. Verschiedene andere inaktive Werkstoffe oder Werkstoffkombinationen sind denkbar. Beim Abstand Null, d.h. bei unmittelbar aufeinanderliegendem schallhartem Element 128 und Schallabsorberelement 130 ergibt sich zwar bereits eine Schallreduzierung, welche jedoch durch die Zwischenschicht weiter optimiert werden könnte. Der Grad der Schallabsorption kann von den Materialeigenschaften und der Dicke der inaktiven Zwischenschicht abhängen.

Diese Scheibenkombination gemäß Figur 2B in Verbindung mit Figur 1 aus Schallabsorberelement 130 auf der Ventilseite und schallhartem Element 128 auf der dem hydraulischen Anschluss zugewandten Seite führt zu einer hohen Schallabsorption, zumal da diese Scheibenkombination den Adapter 112 nach außen abschließt und somit den im Inneren des Adapters 112 durch den Schaltvorgang des Dosierventils 110 erzeugten Schall absorbiert.

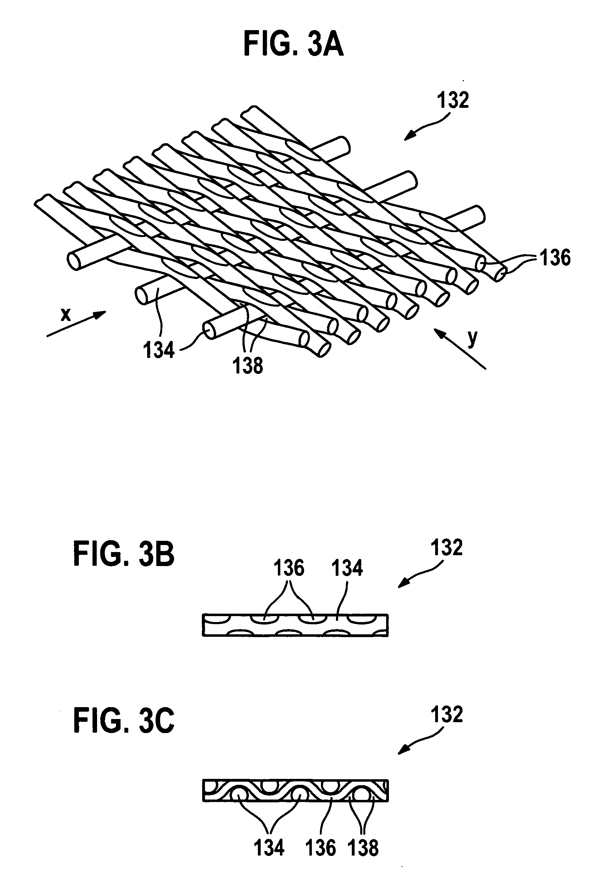

In den Figuren 3A bis 3C ist ein bevorzugtes Ausführungsbeispiel eines metallischen Schallabsorbers 132 dargestellt, wie er in dem Schallabsorberelement 130 gemäß Figur 2B zum Einsatz kommen kann. In diesem Fall handelt es sich bei dem metallischen Schallabsorber 132 um das so genannte "Poroblech" (Hersteller: Firma Härle), welches kommerziell erhältlich ist. Dieses Blech wird, beispielsweise nach dem in DE 103 45 575 B3 beschriebenen Verfahren aus einem Metallgewebe hergestellt. Wie beispielsweise in der perspektivischen Darstellung in Figur 3A ersichtlich ist, weist das Gewebe des metallischen Schallabsorbers 132 in diesem Ausführungsbeispiel Kettfäden 134 und Schussfäden 136 auf, welche miteinander verwebt sind. Nach dem Verweben kann anschließend ein Walzvorgang erfolgen, um die mechanische Festigkeit des Gewebes zu erhöhen und die Porengröße einzustellen. Weiterhin kann, ebenfalls zur Erhöhung der mechanischen Festigkeit und zur Einstellung der Porengröße, ein Sintervorgang (alternativ oder zusätzlich zum Walzen) eingesetzt werden.

Damit ergibt sich die in den Figuren 3B und 3C in der Schnittdarstellung von der Seite (Schliffbilder) dargestellte Struktur. Figur 3B zeigt dabei einen Schliff in Blickrichtung parallel zu den Schussfäden 136 (senkrecht zur Richtung y in Figur 3A), wohingegen Figur 3C ein Schliffbild in Blickrichtung parallel zu den Kettfäden 134 (das heißt in einer Schnittebene senkrecht zur x-Richtung in Figur 3A) zeigt. Dabei ist insbesondere in den Figuren 3A und 3C deutlich zu erkennen, dass die Konstruktion Poren 138 aufweist, welche den oben beschriebenen Schallabsorptionseffekt bewirken.

Durch gezieltes Einstellen der Produktionsparameter, wie beispielsweise der Fadendichte, der Walzung und/oder des Sinterprozesses, können die Eigenschaften des Schallabsorbers 132 gezielt eingestellt werden. Dadurch lassen sich insbesondere gezielt Schallkennimpedanzen des metallischen Schallabsorbers 132 einstellen. Wie oben beschrieben, können typische Porositäten beispielsweise bei 5 % oder bei 40 % liegen (typischerweise zwischen 5 % und 60 %). Typische Blechdicken liegen im Bereich zwischen 0,3 mm und 1 mm, und es lassen sich für die Kettfäden 134 und/oder die Schussfäden 136 beispielsweise Edelstahl, Stahl, Aluminium (gegebenenfalls in Legierung mit Magnesium) oder Kupfer einsetzen. Auch andere Materialien sind jedoch einsetzbar. Die derart erzeugten Bleche der metallischen Schallabsorber 132 lassen sich beispielsweise durch Tiefziehen, Biegen, Stanzen, Bördeln, Laserschneiden und/oder Schweißen verarbeiten.

## Patentansprüche

1. Vorrichtung zum Dosieren eines flüssigen Reduktionsmittels in ein Abgassystem zur Reduzierung von Schadstoffen in einem Abgas, umfassend ein Dosierventil (110) und einen Adapter (112) zur Montage auf einem Abgasrohr, **dadurch gekennzeichnet, dass** das Dosierventil (110) mit dem Adapter (112) durch ein Verbindungselement (124) verbunden ist, wobei das Verbindungselement (124) mindestens einen metallischen Schallabsorber (130, 132) umfasst.

2. Vorrichtung nach Anspruch 1, wobei der metallische Schallabsorber (130, 132) mindestens eines der folgenden Absorberelemente aufweist: ein poröses metallisches Element, insbesondere ein Sinterelement; einen metallischen Verbundwerkstoff; ein metallisches Geflecht, insbesondere ein gesintertes Geflecht und/oder ein gewalztes Geflecht; ein metallisches Gewebe, insbesondere ein gesintertes Gewebe und/oder ein gewalztes Gewebe.

3. Vorrichtung nach dem vorhergehenden Anspruch, wobei der metallische Schallabsorber (130, 132) eine Schichtstruktur aufweist, mit mindestens einer Schicht (130) des Absorberelements und mindestens einer Schicht (128) eines schallharten Elements, (128) vorzugsweise eines schallharten Metalls.

4. Vorrichtung gemäß dem vorhergehenden Anspruch, wobei die Schicht (130) des Absorberelements auf der dem Adapter (112) zuweisenden Seite des Verbindungselements (124) angeordnet ist.

5. Vorrichtung gemäß einem der beiden vorhergehenden Ansprüche, wobei zwischen der Schicht (130) des Absorberelements und der Schicht (128) des schallharten Elements mindestens eine inaktive Zwischenschicht eingefügt ist.

6. Vorrichtung nach einem der vorhergehenden Ansprüche, wobei das Verbindungselement (124) mindestens ein scheibenförmiges Element (118) aufweist.

7. Vorrichtung nach dem vorhergehenden Anspruch, wobei das scheibenförmige Element (118) mindestens eine Nut (126) zur Aufnahme des Dosierventils (110) aufweist, wobei vorzugsweise das scheibenförmige Element (118) als U-förmiges Element mit einer U-Nut zum Eingriff in eine Nut des Dosierventils (110) ausgebildet ist.

8. Vorrichtung nach dem vorhergehenden Anspruch, wobei das scheibenförmige Element (118) weiterhin mindestens eine Auflagefläche (120) zur Auflage auf dem Adapter (112) aufweist.

9. Vorrichtung nach einem der drei vorhergehenden Ansprüche, wobei das scheibenförmige Element (118) ein erstes, dem Adapter (112) zugewandtes scheibenförmiges Schallabsorberelement (130) und ein zweites, dem Adapter (112) abgewandtes schallhartes Element (128) aufweist.

10. Vorrichtung nach dem vorhergehenden Anspruch, wobei das scheibenförmige Schallabsorberelement (130) und das scheibenförmige schallharte Element (128) kraftschlüssig oder formschlüssig miteinander verbunden sind und das scheibenförmige Element (118) bilden.

11. Vorrichtung nach einem der Ansprüche 6 bis 10, wobei das Verbindungselement (124) weiterhin eine Klammer (122) zum kraftschlüssigen Verbinden des Dosierventils (110), des scheibenförmigen Elements (118) und des Adapters (112) aufweist.

## Claims

1. Device for metering a liquid reducing agent into an exhaust system in order to reduce pollutants in an exhaust gas, comprising a metering valve (110) and an adapter (112) for mounting on an exhaust pipe, **characterized in that** the metering valve (110) is connected to the adapter (112) by means of a connecting element (124), with the connecting element (124) comprising at least one metallic sound absorber (130, 132).

2. Device according to Claim 1, with the metallic sound absorber (130, 132) having at least one of the following absorber elements: a porous metallic element, in particular a sintered element; a metallic composite material; a metallic mesh, in particular a sintered mesh and/or a rolled mesh; a metallic fabric, in particular a sintered fabric and/or a rolled fabric.

3. Device according to the preceding claim, with the metallic sound absorber (130, 132) having a layered structure, having at least one layer (130) of the absorber element and at least one layer (128) of a reverberant element, preferably of a reverberant metal.

4. Device according to the preceding claim, with the layer (130) of the absorber element being arranged on that side of the connecting element (124) which faces towards the adapter (112).

5. Device according to one of the two preceding claims, with at least one inactive intermediate layer being inserted between the layer (130) of the absorber element and the layer (128) of the reverberant element.

6. Device according to one of the preceding claims, with the connecting element (124) having at least one disc-shaped element (118).

7. Device according to the preceding claim, with the disc-shaped element (118) having at least one groove (126) for holding the metering valve (110), with preferably the disc-shaped element (118) being designed as a U-shaped element with a U-shaped groove for engaging into a groove of the metering valve (110).

8. Device according to the preceding claim, with the disc-shaped element (118) also having at least one support surface (120) for being supported on the adapter (112).

9. Device according to one of the three preceding claims, with the disc-shaped element (118) having a first disc-shaped sound absorber element (130) which faces towards the adapter (112) and a second reverberant element (128) which faces away from the adapter (112).

10. Device according to the preceding claim, with the disc-shaped sound absorber element (130) and the disc-shaped reverberant element (128) being connected to one another in a non-positively locking or positively locking fashion and forming the disc-shaped element (118).

11. Device according to one of Claims 6 to 10, with the connecting element (124) also having a clamp (122) for connecting the metering valve (110), the disc-shaped element (118) and the adapter (112) in a non-positively locking fashion.

## Revendications

1. Dispositif de dosage d'un agent réducteur fluide dans un système de gaz d'échappement pour réduire les substances toxiques dans un gaz d'échappement, comprenant une soupape de dosage (110) et un adaptateur (112) pour le montage sur un tuyau d'échappement, **caractérisé en ce que** la soupape de dosage (110) est connectée à l'adaptateur (112) par un élément de connexion (124), l'élément de connexion (124) comprenant au moins un dispositif d'insonorisation métallique (130, 132).

2. Dispositif selon la revendication 1, dans lequel le dispositif d'insonorisation métallique (130, 132) présente au moins l'un des éléments d'absorption suivants : un élément métallique, notamment un élément fritté ; un matériau composite métallique ; un maillage fritté et/ou un maillage laminé ; un tissu métallique, notamment un tissu fritté et/ou un tissu laminé.

3. Dispositif selon la revendication précédente, dans lequel le dispositif d'insonorisation métallique (130, 132) présente une structure stratifiée, avec au moins une couche (130) de l'élément d'absorption et au moins une couche (128) d'un élément réverbérant, de préférence d'un métal réverbérant.

4. Dispositif selon la revendication précédente, dans lequel la couche (130) de l'élément d'absorption est disposée du côté de l'élément de connexion (124) tourné vers l'adaptateur (112).

5. Dispositif selon l'une des deux revendications précédentes, dans lequel au moins une couche intermédiaire inactive est disposée entre la couche (130) de l'élément d'absorption et la couche (128) de l'élément réverbérant.

6. Dispositif selon l'une quelconque des revendications précédentes, dans lequel l'élément de connexion (124) présente au moins un élément en forme de disque (118).

7. Dispositif selon la revendication précédente, dans lequel l'élément en forme de disque (118) présente au moins une rainure (126) pour recevoir la soupape de dosage (110), l'élément en forme de disque (118) étant de préférence réalisé sous forme d'élément en forme de U avec une rainure en U pour s'engager dans une rainure de la soupape de dosage (110).

8. Dispositif selon la revendication précédente, dans lequel l'élément en forme de disque (118) présente en outre au moins une surface d'appui (120) pour reposer sur l'adaptateur (112).

9. Dispositif selon l'une des trois revendications précédentes, dans lequel l'élément en forme de disque (118) présente un premier élément d'insonorisation en forme de disque (130) tourné vers l'adaptateur (112) et un deuxième élément réverbérant (128) éloigné de l'adaptateur (112).

10. Dispositif selon la revendication précédente, dans lequel l'élément d'insonorisation en forme de disque (130) et l'élément réverbérant en forme de disque (128) sont connectés l'un à l'autre par engagement par force ou par coopération de forme, et forment l'élément en forme de disque (118).

11. Dispositif selon l'une quelconque des revendications 6 à 10, dans lequel l'élément de connexion (124) présente en outre une pince (122) pour la connexion par engagement par force de la soupape de dosage (110), de l'élément en forme de disque (118) et de l'adaptateur (112).
